# NEW EUROPEAN PATENT SPECIFICATION

(11) **EP 0 856 494 B2**
(45) Date of publication and mention of the opposition decision: **03.04.2013**
(45) Mention of the grant of the patent: 16.05.2001
(21) Application number: 98101836.9
(22) Date of filing: 03.02.1998
(51) Int. Cl.: C03C 25/26, C03C 25/34

(54) **Binding agent for mineral wool and mineral wool product bonded therewith**
Bindemittel für Mineralwolle und damit gebundenes Mineralwolleprodukt
Liant pour laine minérale et produit à base de laine minérale liée avec celui-ci

(30) Priority: 03.02.1997 DE 19703940; 16.05.1997 DE 19720674; 04.09.1997 DE 19738771
(43) Date of publication of application: 05.08.1998
(73) Proprietor: SAINT-GOBAIN ISOVER, 92400 Courbevoie (FR)
(72) Inventor: Kummermehr, Hans, 67059 Ludwigshafen (DE); Bihy, Lothar, 67657 Kaiserlautern (DE)
(74) Representative: Winter, Brandl, Fürniss, Hübner, Röss, Kaiser, Polte - Partnerschaft

(56) References cited:
- EP-A- 0 668 391
- EP-A- 0 669 418
- EP-A- 0 748 777
- DE-A- 4 024 727
- DE-A1- 3 401 835
- DE-U- 29 715 921
- JP-A- 49 103 919
- JP-A- 58 118 244
- US-A- 4 073 849
- US-A- 5 389 716
- US-A- 5 484 653

## Description

The present invention relates to a bound mineral wool product according to claim 1.

For binding mineral wool, in particular rock wool and glass wool, it is known since long to apply a phenol-formaldehyde resin based binding agent onto the fibers, preferably in the dropping pipe subsequent to the defiberizing machine.

Hereby the prior art binding agent is preferably sprayed onto the fibers as an aqueous solution or a dispersion, respectively, whereby the phenol-formaldehyde resin is then further polymerized due to still relatively high temperatures of the fibers on the fiber surface and links the single fibers with each other by the polymerization process, in particular at crossing points of fibers, because the fibers lying over each other on a crossing point are quasi embedded there by solidified resin droplets and, therefore, hinder or prevent the displaceability of the single fibers among one another.

As is known, mineral wool products are used as a protection against heat, coldness, sound or fire, and are, for the predominant part, classified as nonflammable according to DIN 4102. For this purpose the level of organic - i.e. combustible or smoulderable - material, therefore, needs to be kept at a minimum.

Another criterion along with the nonflammability is the mineral wool products' resistance to fire stress, which is of special importance for use of these products as a fire-protection element.

As is known, the fire resistance is defined by the period of time by which, upon a particular rise of the temperature on one side of the fire-protection element, e.g. a fire-proof door, the other side of the fire-protection element remains below a defined limit of temperature, for example 180°C. The hold-up time in minutes of the fire-protection element until reaching the temperature limit on the cold side results in the fire resistance class, whereby according to DIN 4102, part 5, the classification for example of fire resistance class T 30 means a hold-up time of 30 minutes, T 60 a hold-up time of 60 minutes, etc.

In the past layer structures were used to obtain high fire-protection levels, such as for example in the DE-A 38 24 598, which uses as a fire-protection layer a mixture of a dehydrating hydroxide, such as aluminium hydroxide, and waterglass or silica sol, which is arranged as connective layer between two bodies of bonded mineral wool.

The german utility model DE-U 295 07 498 discloses a teaching extending the above, which discloses a fire-protection element with a layer structure, which comprises a center layer of inorganic material, which releases water upon influence of temperature and remains dimensionally stable and is arranged between the outer layers of bonded mineral wool as a prefabricated half-stuff.

EP-A-748 777, DE-A-4 024 727 and US-A-4 073 849 describe binding agents for fibres comprising a thermoplastic resin and a phenotic resin.

EP-A-668 391 and EP-A-669 418 describe binding agents for glass fibres comprising a polymer mixture and a flame proofing agent.

Said prior art has been well approved, but naturally increased layer thicknesses are required, to obtain satisfactory fire resistance levels.

If the fire-protection layers cited in the prior art were omitted, then the risk will occur that the mineral wool of the fire-protection element used would become sintered at possible high fire temperatures, whereby-the fire-protection element loses its efficiency relatively fast. On the other hand, it depends on the nature of the used mineral wool by which temperatures sintering of the mineral wool occurs.

Hereby especially a mineral wool is of great interest which shows a very low biological durability. The judgement of such mineral wools is defined in the prescriptions of the TRGS 905, which has been. published by the Bundesministerium für Arbeit. Such mineral fibers may become sintered for example at temperatures of above about 700°C.

US 5 389 716 and US 5 484 653 disclose a binder system for mineral wool products comprising a mixture of a fire resistant latex and an aqueous aldehyde condensation polymer-based thermosetting resin. The fire resistant latex is halogenated and preferably also carboxylated. In addition, the binds system of US 5 389 716 and US 5 484 653 disclose flameproofing agents such as ammonium polyphosphates.

Therefore, it is the object of the present invention to treat lower melting wool by simple means in such a way, in particular compared to basaltic mineral wool, that insulating materials and fire-protection elements, respectively, are produceable, the fire-resistance of which meets the requirements according to DIN 4102, part 5.

The object above is solved by a bound mineral wool product according to claim 1.

As at least one thermoplastic homo- or copolymer, that is cross-linkable with phenolic resin, phenolic resin as well as at least one flameproofing agent are incorporated in the binding agent according to the invention, high fire-resistance levels reveal which correspond at least to those, which were obtained with conventional fire-protection elements made of basalt wool.

Surprisingly it became apparent that, although organic substances, namely homo- or copolymers cross-linkable with phenolic resin, are added to the binding agent, whereby one skilled in the art would rather expect a deterioration of the fire-protecting behaviour, with for example plates of mineral wool bonded with the binding agent according to the invention having a melting point < 1000°C, e.g. a glass or rock wool having KI ≥ 40 according to TRGS 905, temperatures above 1000°C became possible without sintering or melting the fibers as would have been expected.

At present, the mechanism hereof is not yet clear, but it seems, however, without being limited thereto, that decomposition products of the thermoplast cross-linked with the phenolic resin and the flameproofing agent, so-called crack-products, react with the fibers at high temperatures above 500°C, whereby it could be imaginable that carbon is incorporated in or attached to the fibers such that the fibers undergo a chemical conversion.

If plates of mineral wool which are bonded with the binding agent according to the invention are produced, serial experiments for classifying the fire-resistance time according to DIN 4102, part 5, reveal that surprisingly high hold-up times of up to 90 minutes are achieved.

Important herewith is, that a thermoplastic homo- or copolymer cross-linkable with phenolic resin is used, which then cross-link with eachother on the still hot fibers by being sprayed onto the fibers in the dropping pipe subsequent to the fiber insulation, such that a mixed resin comprising phenolic resin and thermoplastic polymer evolves.

Thus, a mixture consisting of thermoplastic homo- or copolymer, cross-linkable with phenolic resin and the phenolic resin, has also importance per se, although it is not part of the present invention, because such a binding agent also exhibits increased temperature resistance without a flameproofing agent and, apart from that, also results in improved properties of the mineral wool, because the brittleness of the total mineral wool product is reduced and, thus, an improved fiber breakage strength in the individual mineral wool products is provided.

Particularly suitable as thermoplastic homo- or copolymer cross-linkable with a phenolic resin those according to claim 2 have been approved; here in particular, acrylic resins, polyvinyl acetates, polyurethanes as well as their homo- and copolymers, but especially copolymers based on acrylic acid esters also using acrylonitriles, are excellently suited for the purposes of the present invention.

Thus, according to claims 3 and 4, phenolic resins, i.e. the conventionally known phenol-formaldehyde condensation products as well as phenol-urea condensation products or phenol-formaldehyde-urea condensation products, may be used as suitable phenolic resins for the purposes of the present invention.

Preferred flameproofing agents according to claim 5, are ammonium polyphosphates.

These have been very well approved in practice.

Furthermore, additives according to claim 6 may of course be added depending on the intended application of the mineral wool product to be produced.

Particularly effective additives for increasing the temperature resistance of bonded fibers, which are free from suspicion of causing cancer according to TRGS 905, e.g. ≥ KI 40, have been shown to be the so-called fiber stabilizers.

The known stabilizers china clay and silica sol stabilize the mineral wool fibers and prevent excess shrinkage at high temperatures but, surprisingly, in context with the present invention it was found, that a considerable increased stabilization of the fibers is provided, if metal oxide nanogels and/or ceramic and glass powder, respectively, are added to the binding agent.

Due to interaction of the organic substances contained in the binding agent according to the present invention, in particular the thermoplastic polymers, the fibers of rock wool, for example, crystallize at temperatures above about 700°C. The fibers maintain their shape essentially, their surface appears somewhat roughened, and they show themselves as being crystalline in a polarization microsope.

This could be a mechanistic explanation for mineral wool KI-40, which is bonded with a stabilizer-containing binding agent, endures temperatures of up to about 1000°C without being sintered or even being melted.

It was shown, that stabilizers comprising colloidal metal oxides, especially nanogels and/or ceramic and / or glass particles according to claims 7 to 9, which are added to the binding agent, are particularly advantageous.

A further benefit of using fiber-stabilizers according to the claims 7 to 9 is, that the higher the proportion of the stabilizers is the less flameproofing agents are required to obtain the same temperature resistance and fire strength of bound mineral wool products.

A preferred embodiment of the present invention uses at least 10 % of phenolic resin relative to the dry mass of the binding agent.

The subclaims 11 and 12 represent preferred quantitative compositions of the binding agent used for the present invention.

The subclaims 14 to 15 represent preferred embodiments of the mineral wool product of the present invention.

Further benefits and features follow from the descripiton of embodiments of the present invention.

### Example 1

For production of a further binding agent according to the present invention at first the following components were blended to a flameproofing compound:
60 parts water
65 parts of an ammonium-polyphosphate flameproofing agent
50 parts of a copolymer based on acrylic acid ester also using acrylonitrile as a thermoplastic polymer cross-linkable with phenolic resin, and then
175 parts of said flameproofing compound were mixed with 50 parts phenolic resin such that a solids content of about 40 % was provided.

After that, this blend was sprayed in a known manner onto the KI 40 fibers in the dropping pipe.

Mineral wool plates to be used as fire-protection elements for fireproof doors have also shown in the fire-resistance test to have a hold-up time of at least 90 minutes according to DIN 4102, part 5.

## Claims

1. A bound mineral wool product, **characterized by** being bonded with a binding agent containing, relative to its dry mass:
about 2.5 to 70% of at least one thermoplastic homo- or copolymer crosslinkable with phenolic resin,
about 10 to 95 % of at least one phenolic resin,
about 2.5 to 70 % of a flameproofing agent, wherein said flameproofing agent is selected from ammonium phosphates,
about 1 to 50 % stabilizers.

2. Mineral wool product according to claim 1, **characterized in that** the thermoplastic polymers are selected from the group consisting of:
acrylic resins, polyvinyl acetates, polyurethanes as well homo- and copolymers thereof, in particular copolymers based on acrylic acid esters also using acrylonitriles.

3. Mineral wool product according to claim 1 or 2, **characterized in that** the phenolic resins are phenol-formaldehyde condensation products.

4. Mineral wool product according to claim 1 or 2, **characterized in that** the phenolic resins are phenol-formaldehyde-urea condensation products.

5. Mineral wool product according to any one of claims 1 to 4, **characterized in that** the flameproofing agent is selected from ammonium polyphosphates.

6. Mineral wool product according to any one of claims 1 to 5, **characterized by** containing additives, which are selected from the group consisting of:
stabilizers, in particular silica sol, clays, especially kaolinites, montmorillonites, china clay and/or bentonite; thixotropic agents, particularly polysaccharides such as starch, potato starch, polysaccharide derivates such as methyl cellulose; pigment dispersers;
and
mixtures thereof.

7. Mineral wool product according to claim 6, **characterized in that** the stabilizers are selected from the group consisting of:
oxides, in particular colloidal oxides, of aluminium, cerium, silicon, zinc, antimony, tin, yttrium, zirconium, titanium, beryllium, magnesium, boron, especially nanogels of said metal oxides, preferably acetate-stabilized metal oxid nanogels, as well as ceramic powders, in particular glass powder, preferably glass powder having an average particle diameter ranging from about 1 µm to 50 µm, in particular ranging from about 5 µm to 30 µm, especially preferred about 5 µm, and mixtures thereof.

8. Mineral wool product according to claim 7, **characterized in that** the metal oxide nanogels are selected from the group consisting of:
CeO₂, Al₂O₃, Y₂O₃, ZrO₂, SnO₂, B₂O₃, BeO, MgO, ZnO, SiO₂ and TiO₂.

9. Mineral wool product according to any one of claims 7 or 8, **characterized in that** the average particle diameter of the nanogels is about 1 nm to 150 µm, in particular about 5 nm to 1 µm, preferably about 5 nm to 200 nm, especially preferred about 5 nm to 100 nm, particularly preferred about 5 nm to 50 nm, preferably about 5 nm to 20 nm, in particular preferred about 5 nm to 10 nm.

10. Mineral wool product according to any one of claims 1 to 9, **characterized by** selecting the stabilizers from metal oxide nanogels and/or glass particles.

11. Mineral wool product according to any one of claims 1 to 10, **characterized in that** the binding agent contains, relative to its dry mass:
about 2.5 to 60 % thermoplastic polymer,
about 10 to 80 % phenolic resin,
about 2.5 to 50 % flameproofing agent, and
about 5 to 30 % stabilizers, particularly metal oxide nanogels and/or glass particles;
preferably
about 10 to 60 % thermoplastic polymer,
about 10 to 70 % phenolic resin,
about 10 to 60 % flameproofing agent, and
about 5 to 20 % stabilizers, particularly metal oxide nanogels and/or glass particles.

12. Mineral wool product according to any one of claims 1 to 11, **characterized in that** the binding agent contains, relative to its dry mass:
about 25 %, preferably about 23 % thermoplastic polymer,
about 30 %, preferably about 29 % phenolic resin, and
about 45 %, preferably about 48 % flameproofing agent.

13. Mineral wool product according to anyone of claims 1 to 12, **characterized in** comprising rock wool or glass wool, the fibers thereof complying with the Kl 40 criteria.

14. Mineral wool product according to anyone of claims 1 to 13, **characterized by** being provided as plate, mat or felt.

15. Mineral wool product according to any one of claims 1 to 14, **characterized in** being provided as a plate of Kl 40 mineral wool and having a fire resistance time according to DIN 4102, part 5, of at least 60 minutes, preferably 90 minutes.

## Patentansprüche

1. Gebundenes Mineralwolleprodukt, **dadurch gekennzeichnet, dass** es mit einem Bindemittel gebunden ist, welches bezogen auf seine Trockenmasse enthält:
ca. 2,5 bis 70% wenigstens ein mit Phenolharz vernetzbares thermoplastisches Homo- oder Copolymer,
ca. 10 bis 95 % wenigstens eines Phenolharzes,
ca. 2,5 bis 70 % Flammschutzmittel, wobei das Flammschutzmittel ausgewählt ist aus Ammoniumphosphaten,
ca. 1 bis 50 % Stabilisatoren.

2. Mineralwolleprodukt nach Anspruch 1, **dadurch gekennzeichnet, dass** das thermoplastische Polymer ausgewählt ist aus der Gruppe bestehend aus:
Acrylharzen, Polyvinylacetaten, Polyurethanen sowie Homo- und Copolymeren davon, insbesondere Copolymeren auf der Basis von Acrylsäureestern unter Mitverwendung von Acrylnitrilen.

3. Mineralwolleprodukt nach Anspruch 1 oder 2, **dadurch gekennzeichnet, dass** die Phenolharze Phenol-Formaldehyd-Kondensationsprodukte sind.

4. Mineralwolleprodukt nach Anspruch 1 oder 2, **dadurch gekennzeichnet, dass** die Phenolharze Phenol-Formaldehyd-Harnstoff-Kondensationsprodukte sind.

5. Mineralwolleprodukt nach irgendeinem der Ansprüche 1 bis 4, **dadurch gekennzeichnet, dass** das Flammschutzmittel ausgewählt ist aus Ammoniumpolyphosphaten.

6. Mineralwolleprodukt nach irgendeinem der Ansprüche 1 bis 5, **dadurch gekennzeichnet, dass** es Zusatzstoffe enthält, die ausgewählt sind aus der Gruppe bestehend aus:
Stabilisatoren, insbesondere Kieselsol, Tonen, insbesondere Kaoliniten, Montmorilloniten, Chinaton und/oder Bentonit; thixotrope Mittel, vorzugsweise Polysaccharide wie Stärke, Kartoffelstärke, Polysaccharidderivate wie Methylcellulose; Pigmentverteilern; und
Mischungen davon.

7. Mineralwolleprodukt nach Anspruch 6, **dadurch gekennzeichnet, dass** die Stabilisatoren ausgewählt sind aus der Gruppe bestehend aus:
Oxiden, insbesondere kolloidalen Oxiden von Aluminium, Cer, Sillicium, Zink, Antimon, Zinn, Yttrium, Zirkonium, Titan, Beryllium, Magnesium, Bor, insbesondere Nanogele der genannten Metalloxide, vorzugsweise Acetatstabilisierte Metalloxidnanogele sowie Keramikpulver, insbesondere Glaspulver, vorzugsweise Glaspulver mit einem mittleren Teilchendurchmesser im Bereich von ca. 1 µm bis 50 µm, insbesondere im Bereich von ca. 5 µm bis 30 µm, besonders bevorzugt ca. 5 µm, und Mischungen davon.

8. Mineralwolleprodukt nach Anspruch 7, **dadurch gekennzeichnet, dass** die Metalloxidnanogele ausgewählt sind aus der Gruppe bestehend aus:
CeO₂, Al₂O₃, Y₂O₃, ZrO₂, SnO₂, B₂O₃, BeO, MgO, ZnO, SiO₂ und TiO₂.

9. Mineralwolleprodukt nach einem der Ansprüche 7 oder 8, **dadurch gekennzeichnet, dass** der mittlere Teilchendurchmesser der Nanogele ca. 1 nm bis 150 µm, insbesondere ca. 5 nm bis 1 µm, vorzugsweise ca. 5 nm bis 200 nm, besonders bevorzugt ca. 5 nm bis 100 nm, insbesondere bevorzugt ca. 5 nm bis 50 nm, vorzugsweise ca. 5 nm bis 20 nm, insbesondere bevorzugt ca. 5 nm bis 10 nm, beträgt.

10. Mineralwolleprodukt nach irgendeinem der Ansprüche 1 bis 9, **gekennzeichnet durch** Auswählen der Stabilisatoren aus Metalloxidnanogelen und/oder Glaspartikeln.

11. Mineralwolleprodukt nach irgendeinem der Ansprüche 1 bis 10, **dadurch gekennzeichnet dass** das Bindemittel bezogen auf seine Trockenmasse enthält:
ca. 2,5 bis 60 % thermoplastisches Polymer,
ca. 10 bis 80 % Phenolharz,
ca. 2,5 bis 50 % Flammschutzmittel, und
ca. 5 bis 30 % Stabilisatoren, insbesondere Metalloxidnanogele und/oder
Glaspartikel;
vorzugsweise
ca. 10 bis 60 % thermoplastisches Polymer,
ca. 10 bis 70 % Phenolharz,
ca. 10 bis 60 % Flammschutzmittel, und
ca. 5 bis 20 % Stabilisatoren, insbesondere Metalloxidnanogele und/oder Glaspartikel.

12. Mineralwolleprodukt nach irgendeinem der Ansprüche 1 bis 11, **dadurch gekennzeichnet dass** das Bindemittel, bezogen auf seine Trockenmasse:
ca. 25 %, vorzugsweise ca. 23 % thermoplastisches Polymer,
ca. 30 %, vorzugsweise ca. 29 % Phenolharz, und
ca. 45 %, vorzugsweise ca. 48 % Flammschutzmittel,
enthält.

13. Mineralwolleprodukt nach irgendeinem der Ansprüche 1 bis 12, **gekennzeichnet durch** Enthalten von Stein- oder Glaswolle, deren Fasern die Kl 40 Kriterien erfüllen.

14. Mineralwolleprodukt nach irgendeinem der Ansprüche 1 bis 13, **dadurch gekennzeichnet dass** es als Platte, Matte oder Filz vorliegt.

15. Mineralwolleprodukt nach irgendeinem der Ansprüche 1 bis 14, **dadurch gekennzeichnet** das es als Platte aus Kl 40 Mineralwolle vorliegt und einen Feuerwiderstand nach DIN 4102, Teil 5, von wenigstens 60 Minuten, vorzugsweise 90 Minuten, aufweist.

## Revendications

1. Un produit à base de laine minérale liée, **caractérisé en ce qu'**il est lié par un liant contenant, exprimés par rapport à sa masse sèche,:
- environ 2,5 à 70% d'au moins un homopolymère ou copolymère thermoplastique réticulable avec une résine phénolique,
- environ 10 à 95% d'au moins une résine phénolique,
- environ 2,5 à 70% d'un agent ignifugeant, lequel agent ignifugeant est sélectionné parmi les phosphates d'ammonium, et
- environ 1 à 50% de stabilisants,

2. Produit à base de laine minérale selon la revendication 1, **caractérisé en ce que** les polymères thermoplastiques sont choisit dans le groupe formé par les résines acryliques, les poly(acétates de vinyle), les polyuréthannes ainsi que leurs homo- et copolymères, en particulier les copolymères à base d'esters de l'acide acrylique utilisant également des acrylonitriles.

3. Produit à base de laine minérale selon la revendication 1 ou 2, **caractérisé en ce que** les résines phénoliques sont des produits de condensation phénolformaldéhyde.

4. Produit à base de laine minérale selon la revendication 1 ou 2, **caractérisé en ce que** les résines phénoliques sont des produits de condensation phénolformaldéhyde-urée.

5. Produit à base de laine minérale selon l'une quelconque des revendications 1 à 4, **caractérisé en ce que** l'agent ignifugeant est sélectionné parmi les polyphosphates d'ammonium.

6. Produit à base de laine minérale selon l'une quelconque des revendications 1 à 5, **caractérisé en ce qu'**il contient des additifs, qui sont choisis dans le groupe comprenant des stabilisants, en particulier le sol de silice, des argiles, en particulier les kaolinites, les montmorillonites, le kaolin et/ou la bentonite; des agents thixotropes, en particulier des polysaccharides telles que l'amidon, la fécule de pomme de terre, les dérivés de polysaccharide tels que la méthylcellulose; des disperseurs de pigments; et leurs mélanges.

7. Produit à base de laine minérale selon la revendication 6, **caractérisé en ce que** les stabilisants sont choisis dans le groupe comprenant les oxydes, en particulier les oxydes colloïdaux, d'aluminium, de cérium, de silicium, de zinc, d'antimoine, d'étain, d'yttrium, de zirconium, de titane, de béryllium, de magnésium, de bore, en particulier les nanogels desdits oxydes métalliques, de préférence les nanogels d'oxyde métallique stabilisés avec l'acétate, ainsi que les poudres céramiques, en particulier la poudre de verre, de préférence la poudre de verre ayant un diamètre de particule moyen dans la gamme d'environ 1 µm à 50 µm, en particulier dans la gamme d'environ 5µm à 30 µm, et plus particulièrement de préférence d'environ 5 µm et leurs mélanges.

8. Produit à base de laine minérale selon la revendication 7, **caractérisé en ce que** les nanogels d'oxyde métallique sont choisis dans le groupe comprenant:
CeO₂, Al₂O₃, Y₂O₃, ZrO₂, SnO₂, B₂O₃, BeO, MgO, ZnO, SiO₂ et TiO₂

9. Produit à base de laine minérale selon l'une quelconque des revendications 7 ou 8, **caractérisé en ce que** le diamètre de particule moyen des nanogels est d'environ 1 nm à 150 µm, en particulier d'environ 5 nm à 1 µm, de préférence d'environ 5 nm à 200 µm, encore plus particulièrement d'environ 5 nm à 100 nm, et de façon plus particulièrement préférée d'environ 5 nm à 50 nm, de préférence d'environ 5 nm à 20 nm, de préférence plus particulièrement d'environ 5 nm à 10 nm.

10. Produit à base de laine minérale selon l'une quelconque des revendications 1 à 9, **caractérisé en ce que** les stabilisants sont sélectionnés parmi les nanogels d'oxyde métallique et/ou les particules de verre.

11. Produit à base de laine minérale selon l'une quelconque des revendications 1 à 10, **caractérisé en ce que** le liant contient, exprimés par rapport à sa masse sèche:
- environ 2,5 à 60% de polymère thermoplastique,
- environ 10 à 80% de résine phénolique,
- environ 2,5 à 50% d'agent ignifugean
- environ 5 à 30% de stabilisants, en particulier des nanogels d'oxyde métallique et/ou des particules de verre;
de préférence
- environ 10 à 60% de polymère thermoplastique,
- environ 10 à 70% de résine phénolique,
- environ 10 à 60% d'agent ignifugeant, et
- environ 5 à 20% de stabilisants, en particulier des nanogels d'oxyde métallique et/ou des particules de verre.

12. Produit à base de laine minérale selon l'une quelconque des revendications 1 à 11, **caractérisé en ce qu'**il contient:
- environ 25%, de préférence environ 23% de polymère thermoplastique,
- environ 30%, de préférence environ 29% de résine phénolique,
- environ 45%, de préférence environ 48% d'agent ignifugeant.

13. Produit à base de laine minérale selon l'une quelconque des revendications 1 à 12, **caractérisé en ce qu'**il comprend de la laine de roche ou de la laine de verre, dont les fibres sont conformes avec les critères KI 40.

14. Produit à base de laine minérale selon l'une quelconque des revendications 1 à 13, **caractérisé en ce qu'**il est disponible sous forme de plaque, de mat ou de feutre.

15. Produit à base de laine minérale selon l'une quelconque des revendications 1 à 14, **caractérisé en ce qu'**il est fourni sous forme d'une plaque de laine minérale KI 40 et qu'il possède une durée de résistance au feu selon DIN 4102, partie 5, d'au moins 60 minutes, de préférence 90 minutes.
